# EUROPÄISCHE PATENTSCHRIFT

(11) **EP 3 963 485 B1**
(45) Veröffentlichungstag und Bekanntmachung des Hinweises auf die Patenterteilung: **19.04.2023**
(21) Anmeldenummer: 19739902.5
(22) Anmeldetag: 26.06.2019
(51) Int. Cl.: G06F 21/31, G06F 21/32, G06F 21/34

(54) **BENUTZERAUTHENTIFIZIERUNG**
USER AUTHENTICATION
AUTHENTIFICATION D'UN UTILISATEUR

(43) Veröffentlichungstag der Anmeldung: 09.03.2022
(73) Patentinhaber: Siemens Aktiengesellschaft, 80333 München (DE)
(72) Erfinder: KUBO, Florian, 97727 Fuchsstadt (DE); JÖHNSSEN, Oliver, 90451 Nürnberg (DE); KRÜGER, Daniel, 91154 Roth (DE)
(74) Vertreter: Siemens Patent Attorneys
(86) Internationale Anmeldenummer: PCT/EP2019/066938
(87) Internationale Veröffentlichungsnummer: WO 2020/259818

(56) Entgegenhaltungen:
- US-A1- 2013 114 865
- US-A1- 2016 063 227
- US-A1- 2017 124 362

## Beschreibung

Die Erfindung betrifft ein Verfahren zur Benutzerauthentifizierung, ein entsprechendes System sowie ein Softwaresystem.

Benutzerauthentifizierung findet in vielen Kontexten statt, insbesondere wenn verschiedene Benutzer Zugang oder Zugriff zu einer Maschine oder einem Computersystem haben sollen.

Bekannte Ansätze zur Authentifizierung eines Benutzers basieren auf dem Nachweis der Kenntnis einer Information, beispielsweise eines Passworts oder einer PIN, oder auf dem Besitz eines Gegenstands, beispielsweise eines Schlüssels oder einer Chipkarte. Außerdem können Verfahren zur Erkennung biometrischer Informationen, beispielsweise von Fingerabdrücken oder Gesichtsformen, verwendet werden. Auch eine Kombination solcher Verfahren ist möglich, zum Beispiel indem eine Chipkarte vorgelegt werden und eine PIN eingegeben werden muss.

Bekannten Ansätzen ist gemein, dass der Benutzer, der sich Zugriff zu der passwortgeschützten oder zugriffsgeschützten Vorrichtung verschaffen will, stets selbst aktiv werden muss, um die Authentifizierung durchzuführen, beispielsweise, indem er das Passwort in eine Benutzerschnittstelle eingibt oder den Finger auf einen entsprechenden Fingerabdrucksensor legt.

Dementsprechend verliert der Benutzer durch die Authentifizierung Zeit. Der Zeitverlust vergrößert sich im Falle von Fehleingaben oder fehlerhaften Erfassungen. Zudem ist die aktive Authentifizierung für den Benutzer selbst unkomfortabel. Authentifizierungsverfahren, die auf der Erkennung von Fingerabdrücken oder Gesichtsprofilen beruhen, haben zusätzlich den Nachteil, dass sie gegebenenfalls nicht in jeder Situation oder bei jeder Tätigkeit des Benutzers sofort durchführbar sind. Wenn der Benutzer beispielsweise Handschuhe trägt, muss er zunächst die Handschuhe ausziehen, um einen Fingerabdrucksensor bedienen zu können. Ähnlich verhält es sich hinsichtlich der Gesichtserkennung, wenn der Benutzer eine Schutzmaske, eine Haube, eine Schutzbrille oder dergleichen trägt.

Die Authentifizierung eines Nutzers mit Hilfe von durchgeführter Gesichtsbiometrie ist beispielsweise beschrieben in der Druckschrift US 2013/0114865 A1.

Aus der Druckschrift US 2016/0063227 A1 ist ein Verfahren zur elektronischen Authentifizierung bekannt, welches auf Basis von zuvor ermittelten Eingangswerten passiv (also ohne weitere Eingabe eines Benutzers) einen Konfidenzwert ermittelt, welcher relevant ist zur Durchführung einer Authentifizierung eines Benutzers.

Ebenfalls bekannt ist ein Verfahren zur Authentisierung eines Nutzers aus der Druckschrift US 2017/0124362 A1, wobei der Nutzer hier ein sogenanntes "Wearable" trägt, wobei die Gewährung des Zugriffs abhängig sein kann von der jeweiligen Nutzungs-Situation.

Vor diesem Hintergrund ist es eine Aufgabe der vorliegenden Erfindung, ein verbessertes Konzept zur Benutzerauthentifizierung anzugeben, welches einen Benutzerkomfort erhöht und gleichzeitig einen Zeitverlust durch den Authentifizierungsvorgang verringert.

Erfindungsgemäß wird diese Aufgabe durch ein Verfahren, ein System und ein Softwaresystem zur Benutzerauthentifizierung nach den unabhängigen Ansprüchen gelöst. Vorteilhafte Weiterbildungen und weitere Ausführungsformen sind Gegenstand der abhängigen Ansprüche.

Das verbesserte Konzept beruht auf der Idee, den eigentlichen Authentifizierungsvorgang vom Zeitpunkt des Zugriffs auf eine zugriffsgeschützte Vorrichtung zu entkoppeln, indem in einem vorgelagerten Aufnahmezeitraum biometrische Informationen zur Authentifizierung des Benutzers erfasst werden und der Zugriff auf die zugriffsgeschützte Vorrichtung automatisiert abhängig von einem Konfidenzwert der biometrischen Informationen freigegeben wird.

Gemäß einem ersten unabhängigen Aspekt des verbesserten Konzepts wird ein Verfahren zur Benutzerauthentifizierung angegeben. Dabei werden mittels eines mobilen, elektronischen Geräts während eines Aufnahmezeitraums biometrische Informationen eines Benutzers des Geräts erfasst. In Abhängigkeit von den biometrischen Informationen wird ein Konfidenzwert für eine Authentizität des Benutzers mittels eines Computersystems bestimmt. Mittels einer Authentifizierungseinheit wird festgestellt, dass sich das Gerät in einer vorgegebenen Umgebung einer zugriffsgeschützten Vorrichtung befindet. Mittels der Authentifizierungseinheit wird der Zugriff auf die Vorrichtung in Abhängigkeit von dem Konfidenzwert freigegeben, insbesondere automatisch freigegeben.

Unter einem mobilen elektronischen Gerät kann hier und im Folgenden ein elektronisches Gerät verstanden werden, das zum Mitführen, insbesondere zum dauerhaften Mitführen, durch einen Benutzer des Geräts ausgelegt ist. Das mobile elektronische Gerät kann insbesondere ein Mobiltelefon, ein Smartphone, ein Tablet, ein Notebook, ein sonstiges tragbares Computersystem oder ein sogenanntes Wearable beinhalten. Als Wearable oder Wearable Computer können dabei Computersysteme oder elektronische Geräte bezeichnet werden, die während ihrer Anwendung am Körper des Benutzers getragen werden oder in eine Kleidung des Benutzers integriert sind. Beispielsweise können Datenbrillen oder Smart Watches als Wearables bezeichnet werden.

Unter biometrischen Informationen, welche insbesondere auch anthropometrische Informationen beinhalten können, können hier und im Folgenden Informationen verstanden werden, die sich für eine automatisierte Erkennung von Individuen, basierend auf ihrem Verhalten und/oder biologischen Charakteristika eignen.

Bei dem Aufnahmezeitraum handelt es sich insbesondere um einen Zeitraum oder eine Ansammlung mehrerer zusammenhängender oder getrennter Unterzeiträume, während derer der Benutzer das mobile elektronische Gerät mitführt oder benutzt. Insbesondere liegt der Aufnahmezeitraum zeitlich vor dem tatsächlichen Zugriff auf die Vorrichtung beziehungsweise der Freigabe des Zugriffs durch die Authentifizierungseinheit, um den Authentifizierungsvorgang vom Zeitpunkt des Zugriffs zu entkoppeln.

Die biometrischen Informationen werden während des Aufnahmezeitraums von dem elektronischen Gerät insbesondere gesammelt, also erfasst und gespeichert. Das Erfassen der biometrischen Informationen erfolgt dabei mittels entsprechender Sensoren des Geräts oder mittels Sensoren, die mit dem Gerät gekoppelt oder verbunden sind.

Die Authentizität des Benutzers entspricht beispielsweise der Übereinstimmung des tatsächlichen Benutzers des elektronischen Geräts mit einem vorgegebenen Individuum. Der Konfidenzwert für die Authentizität entspricht dabei einer Konfidenz oder Wahrscheinlichkeit, mit der aufgrund der biometrischen Informationen auf die Authentizität des Benutzers geschlossen werden kann.

Insbesondere kann der Konfidenzwert mittels des Computersystems basierend auf einem oder mehreren Vergleichen der biometrischen Informationen mit biometrischen Referenzinformationen oder Referenzdaten erfolgen. Die Referenzdaten können dabei biometrischen Informationen entsprechen, für die aufgrund unabhängiger Informationen mit ausreichender Sicherheit, also mit einer über einer vorgegebenen Grenze liegenden Wahrscheinlichkeit, von der Authentizität des Benutzers ausgegangen werden kann.

Beispielsweise können die Referenzdaten durch die Kombination Erfassung der biometrischen Informationen mit konventionellen Methoden zur Authentifizierung, beispielsweise Passworteingabe oder Fingerabdruckerkennung oder anderen auf Wissen und/oder Besitz basierenden Authentifizierungsmethoden erzeugt oder verifiziert werden.

Dass mittels der Authentifizierungseinheit festgestellt wird, dass sich das Gerät in der vorgegebenen Umgebung befindet, kann derart verstanden werden, dass mittels der Authentifizierungseinheit geprüft wird, ob sich das Gerät in der Umgebung befindet und diese Prüfung positiv ist. Insbesondere wird der Zugriff auf die Vorrichtung mittels der Authentifizierungseinheit in Abhängigkeit von dem Konfidenzwert freigegeben, wenn durch die Authentifizierungseinheit festgestellt wurde, dass sich das Gerät in der vorgegebenen Umgebung befindet.

Die Authentifizierungseinheit beinhaltet beispielsweise eine Recheneinheit, insbesondere eine Recheneinheit der zugriffsgeschützten Vorrichtung, welche mit dem Computersystem drahtlos oder drahtgebunden kommunizieren kann.

Insbesondere kann die Authentifizierungseinheit von dem Computersystem den Konfidenzwert oder von dem Konfidenzwert abhängige oder basierend auf dem Konfidenzwert erzeugte Daten erhalten, insbesondere Authentifizierungsdaten. Die Authentifizierungsdaten können implementierungsspezifisch beispielsweise einen Benutzeridentifikator, einen Softwareidentifikator, einen Geräteidentifikator, einen temporären Zugriffsschlüssel, einen Benutzernamen und/oder ein Passwort enthalten.

Um festzustellen, dass sich das Gerät in der vorgegebenen Umgebung befindet, kann die Authentifizierungseinheit beispielsweise mit dem mobilen elektronischen Gerät kommunizieren, insbesondere drahtlos, oder mit einer Positionsbestimmungseinrichtung, die extern zu dem mobilen elektronischen Gerät, beispielsweise in der Umgebung der Vorrichtung, vorgesehen ist.

Die Kommunikation zwischen der Authentifizierungseinheit und dem mobilen elektronischen Gerät kann beispielsweise per RFID, NFC, Bluetooth, WLAN oder einer sonstigen Funkverbindung erfolgen.

Bei der zugriffsgeschützten Vorrichtung handelt es sich insbesondere um eine Vorrichtung, die vor unberechtigtem Zugang oder Zugriff geschützt ist und/oder die mehrere Zugangs- oder Zugriffskategorien aufweist, wobei zum Beispiel unterschiedliche Benutzer Zugang gemäß unterschiedlicher Zugangs- oder Zugriffskategorien haben können.

Bei der zugriffsgeschützten Vorrichtung kann es sich beispielsweise um eine Anlage oder Maschine, eine Datenverarbeitungsanlage, ein Computersystem, eine Tür, ein Tor oder eine sonstige Schließvorrichtung handeln.

Dass der Zugriff auf die Vorrichtung in Abhängigkeit von dem Konfidenzwert freigegeben wird, kann beispielsweise derart verstanden werden, dass der Zugriff abhängig davon freigegeben wird, ob der Konfidenzwert größer, gleich oder kleiner ist als ein vorgegebener Mindestwert.

Der Zugriff kann beispielsweise einen physischen Zugang zu der Vorrichtung, ein Entsperren der Vorrichtung oder einer Benutzerschnittstelle der Vorrichtung, Lese-, Schreib- und/oder Benutzungsrechte einer vorgegebenen Kategorie oder die Möglichkeit zur Bedienung der Vorrichtung beinhalten. Beispielsweise im Falle einer Tür oder eines Tors, kann der Zugriff auch das Öffnen eines Schlosses der Tür beziehungsweise des Tors beinhalten.

Der Konfidenzwert kann insbesondere zeitabhängig sein. Beispielsweise kann sich die Datenmenge der biometrischen Informationen während des Aufnahmezeitraums erhöhen. Der Konfidenzwert kann beispielsweise mit der höheren Datenmenge ebenfalls größer werden, sofern die Konsistenz der biometrischen Daten oder Informationen gegeben ist oder gegeben bleibt. Je größer die Menge an konsistenten biometrischen Informationen, die für die Authentizität des Benutzers sprechen, desto höher kann der Konfidenzwert sein.

Je nach Art der erfassten biometrischen Informationen, kann der Aufnahmezeitraum in der Größenordnung von Sekunden oder wenigen Minuten bis hin zu mehreren Monaten oder noch länger reichen. Insbesondere können die gesammelten biometrischen Informationen auch für weitere Authentifizierungsvorgänge zum Zugriff auf die Vorrichtung genutzt werden. Der Aufnahmezeitraum kann dann beispielsweise als Teil eines weiteren Aufnahmezeitraums für einen der weiteren Authentifizierungsvorgänge aufgefasst werden.

Durch das Sammeln der biometrischen Informationen und eine entsprechende, insbesondere kontinuierliche, Erzeugung und Aktualisierung des Konfidenzwertes mittels des elektronischen Geräts und des Computersystems wird sichergestellt, dass der Zugriff auf die Vorrichtung nur dann automatisiert freigegeben wird, wenn der Konfidenzwert anzeigt, dass das Gerät von dem rechtmäßigen Benutzer oder dem erwarteten Benutzer mitgeführt wird.

Gemäß einem Verfahren nach dem verbesserten Konzept wird also effektiv der Zeitraum, zu dem die eigentliche Authentifizierung stattfindet, nämlich der Aufnahmezeitraum, von dem Zeitpunkt des tatsächlichen Zugriffs oder der Freigabe des Zugriffs, entkoppelt.

Anstatt die Überprüfung der biometrischen Informationen erst unmittelbar bei der Anmeldung beziehungsweise beim Zugriff auf die Vorrichtung durchzuführen, wird nach dem verbesserten Konzept die Authentizität gewissermaßen im Hintergrund kontinuierlich sichergestellt.

Dadurch ist es grundsätzlich nicht mehr erforderlich, dass der Benutzer aktiv wird, um die Authentifizierung durchzuführen. Das verbesserte Konzept beschreibt insbesondere eine passive Authentifizierung in dem Sinne, als dass der Benutzer während der normalen Benutzung des elektronischen Geräts seine Authentizität automatisch bestätigt.

Dadurch kann bei der Freigabe des tatsächlichen Zugriffs je nach Konfidenzwert auf eine aktive Handlung des Benutzers verzichtet werden, was zu einer Zeitersparnis und einem verbesserten Komfort für den Benutzer führt.

Im Normalfall muss sich der Benutzer weder Passwörter oder dergleichen merken, noch spezielle Objekte zur Authentifizierung mitführen.

Durch die Zuordnung der biometrischen Informationen zu dem Benutzer ist auch eine individuelle Identifizierung des Benutzers und damit eine rollen- oder benutzerabhängige Freigabe des Zugriffs möglich.

Auch der Zeitverlust beziehungsweise Komforteinbußen durch fehlerhafte Eingaben oder Erfassungen direkt bei der Anmeldung entfallen nach dem verbesserten Konzept.

Da die Erfassung der biometrischen Informationen während des Aufnahmezeitraums stattfindet, der verschiedene Arbeits- und Lebenssituationen des Benutzers abdecken kann, ist es insbesondere auch nicht notwendig, dass die entsprechenden biometrischen Kenngrößen oder Messwerte zum Zeitpunkt des konkreten Zugriffs auf die Vorrichtung beziehungsweise dessen Freigabe verfügbar sind. Dadurch werden Einschränkungen bei bestimmter Kleidung, beispielsweise beim Tragen von Handschuhen, Schutzmasken oder Schutzbrillen, vermieden.

Gemäß zumindest einer Ausführungsform des Verfahrens wird der Zugriff auf die Vorrichtung mittels des Computersystems automatisch freigegeben, wenn der Konfidenzwert größer oder gleich dem vorgegebenen Mindestwert ist.

Unter einer automatischen Freigabe kann dabei beispielsweise verstanden werden, dass keine aktive Authentifizierungshandlung des Benutzers erforderlich ist. Es kann also von einer passiven Authentifizierung gesprochen werden.

Gemäß zumindest einer Ausführungsform wird mittels der Authentifizierungseinheit eine Aufforderung zu einer aktiven Authentifizierung ausgegeben, insbesondere an den Benutzer, wenn der Konfidenzwert kleiner ist als der vorgegebene Mindestwert oder kleiner als ein weiterer vorgegebener Mindestwert.

Die Aufforderung beinhaltet beispielsweise ein optisches, visuelles und/oder akustisches Signal auf einem Anzeigegerät der Vorrichtung und/oder auf einem Anzeigegerät des mobilen elektronischen Geräts. Insbesondere beinhaltet die Aufforderung eine Benutzeranweisung auf einem Display der Vorrichtung oder des Geräts, die den Benutzer dazu auffordert beziehungsweise darauf hinweist, dass er eine aktive Authentifizierungshandlung vornehmen muss, um Zugriff zu der Vorrichtung zu erhalten.

Die aktive Authentifizierungshandlung kann beispielsweise die Eingabe eines Passworts oder einer PIN, das Benutzen eines Schlüssels, eines RFID Sensors oder einer Chipkarte oder das Einlesen biometrischer Daten, beispielsweise eines Fingerabdrucks, beinhalten.

Wenn der Konfidenzwert kleiner ist als der vorgegebene Mindestwert kann dies bedeuten, dass eine Person das mobile elektronische Gerät mitführt, die dazu oder zum Zugriff auf die Vorrichtung nicht berechtigt ist. Es kann jedoch auch bedeuten, dass die biometrischen Informationen von den Referenzdaten aus anderen Gründen abweichen. Beispielsweise kann der rechtmäßige Benutzer sich in einer bisher nicht erfassten Weise verhalten, sodass ein positiver Abgleich mit den Referenzdaten in dieser Hinsicht nicht möglich ist. Ein biometrisches Charakteristikum, welches zu den biometrischen Informationen beiträgt, kann sich für den rechtmäßigen Benutzer auch dauerhaft oder vorübergehend verändert haben. Beispielsweise kann der Benutzer eine Krankheit, eine Verletzung oder eine sonstige physische Veränderung aufweisen, welche eine Herzfrequenz, eine Hauttemperatur, eine Schrittweite oder ein sonstiges biometrisches Charakteristikum vorübergehend oder dauerhaft verändert.

In einem solchen Fall wird durch die Aufforderung zur aktiven Authentifizierung eine Rückfallebene bereitgestellt, um eine erhöhte Sicherheit zu gewährleisten, insbesondere wenn dies anhand der biometrischen Informationen aktuell nicht möglich ist.

Gemäß zumindest einer Ausführungsform wird der Zugriff auf die Vorrichtung mittels der Authentifizierungseinheit in Abhängigkeit von der aktiven Authentifizierung freigegeben.

Gemäß zumindest einer Ausführungsform wird der Zugriff mittels der Authentifizierungseinheit freigegeben, wenn die aktive Authentifizierung erfolgreich durchgeführt wird.

Gemäß zumindest einer Ausführungsform wird der Zugriff mittels der Authentifizierungseinheit nicht freigegeben, wenn die aktive Authentifizierung nicht oder nicht erfolgreich durchgeführt wird.

Gemäß zumindest einer Ausführungsform wird ein Zugriff auf das mobile elektronische Gerät mittels des mobilen elektronischen Geräts oder mittels des Computersystems gesperrt, wenn die aktive Authentifizierung nicht oder nicht erfolgreich durchgeführt wird.

Gemäß zumindest einer Ausführungsform wird ein Algorithmus zum Bestimmen des Konfidenzwerts mittels des Computersystems in Abhängigkeit von den biometrischen Informationen angepasst, wenn die aktive Authentifizierung erfolgreich durchgeführt wird.

Bei dem Algorithmus handelt es sich insbesondere um mehrere vordefinierte Vorschriften, die beispielsweise in Form eines Computerprogramms vorliegen, die von dem Computersystem durchgeführt werden, um abhängig von den biometrischen Informationen den Konfidenzwert zu bestimmen. Insbesondere beinhaltet der Algorithmus auch die Auswahl der Referenzdaten.

Gemäß zumindest einer Ausführungsform werden die Referenzdaten zum Bestimmen des Konfidenzwerts mittels des Computersystems in Abhängigkeit von den biometrischen Informationen angepasst, wenn die aktive Authentifizierung erfolgreich durchgeführt wird.

Dadurch, dass die aktive Authentifizierung erfolgreich durchgeführt wurde, obwohl der Konfidenzwert kleiner war als der vorgegebene Mindestwert, kann darauf geschlossen werden, dass die im konkreten Fall aufgezeichneten biometrischen Informationen für die Authentizität des Benutzers sprechen.

Auf diese Weise unterliegen der Algorithmus beziehungsweise die Referenzdaten einem Lernprozess abhängig von den biometrischen Informationen.

Je länger und systematischer die biometrischen Informationen aufgezeichnet werden und gegebenenfalls mit aktiven Authentifizierungsvorgängen abgeglichen werden wie beschrieben, desto seltener wird der Konfidenzwert kleiner sein als der vorgegebene Mindestwert, sofern der rechtmäßige Benutzer das Gerät mitführt. Demzufolge reduziert sich auch die Häufigkeit der Fälle, in denen eine aktive Authentifizierung durch den rechtmäßigen Benutzer notwendig ist.

Gemäß zumindest einer Ausführungsform werden während des Aufnahmezeitraums mittels des Geräts zwei oder mehr verschiedene biometrische Charakteristika des Benutzers erfasst, um die biometrischen Informationen zu erfassen. In Abhängigkeit von jedem der zwei oder mehr biometrischen Charakteristika wird ein jeweiliger Einzelkonfidenzwert für die Authentizität des Benutzers mittels des Computersystems bestimmt. Der Konfidenzwert wird mittels des Computersystems abhängig von den Einzelkonfidenzwerten bestimmt.

Der Konfidenzwert kann also als Gesamtkonfidenzwert betrachtet werden, der sich aus mindestens zwei Einzelkonfidenzwerten speist. Beispielsweise kann ein Mittelwert, eine Summe, ein gewichteter Mittelwert oder eine gewichtete Summe aus den Einzelkonfidenzwerten gebildet werden, um den Konfidenzwert zu bestimmen.

Unter einem biometrischen Charakteristikum kann insbesondere ein anthropometrisches Charakteristikum, ein biologisches Charakteristikum oder ein Verhaltens-Charakteristikum des Benutzers verstanden werden, welches jeweils anhand eines oder mehrerer Sensoren messbar ist.

Durch die Berücksichtigung wenigstens zweier verschiedener biometrischer Charakteristika kann eine höhere Zuverlässigkeit und schlussendlich eine höhere Sicherheit des Verfahrens ermöglicht werden. Ein einzelnes Charakteristikum kann gegebenenfalls nicht mit ausreichender Sicherheit die Authentizität des Benutzers sicherstellen, je nach dem welches Charakteristikum verwendet wird. Durch die Kumulation mehrerer biometrischer Charakteristika kann jedoch ein sehr zuverlässiges Profil des Benutzers erstellt werden und die Authentizität des Benutzers mit sehr hoher Wahrscheinlichkeit richtig bewertet werden.

Vorzugsweise beinhalten die zwei oder mehr verschiedenen biometrischen Charakteristika drei, vier, fünf oder mehr verschiedene biometrische Charakteristika.

Gemäß zumindest einer Ausführungsform werden die zwei oder mehr biometrischen Charakteristika jeweils mittels wenigstens eines Sensors des Geräts und/oder mittels wenigstens eines mit dem Gerät gekoppelten Sensors erfasst.

Insbesondere werden die Charakteristika automatisiert erfasst, sodass der Benutzer zum Zwecke der Authentifizierung beziehungsweise der Erzeugung des Konfidenzwertes nicht aktiv werden muss, um die biometrischen Informationen zu erfassen.

Beispielsweise kann eine bestimmungsgemäße Benutzung des mobilen elektronischen Geräts, beispielsweise des Mobiltelefons und dessen Benutzerschnittstellen oder Sensoren, genutzt werden, um die biometrischen Informationen im Hintergrund zu erfassen.

Gemäß zumindest einer Ausführungsform werden die zwei oder mehr biometrischen Charakteristika jeweils mittels eines oder mehrerer Mikrofone, eines oder mehrerer Inertialsensoren, eines Positionssensors, eines Herzfrequenzsensors, eines Pulsoximeters, eines Leitfähigkeitssensors, eines Temperatursensors, eines Fingerabdrucksensors, einer oder mehrerer Kameras und/oder eines oder mehrerer Berührungssensoren bestimmt.

Gemäß zumindest einer Ausführungsform beinhaltet der wenigstens eine Sensor des Geräts und/oder der wenigstens eine mit dem Gerät gekoppelte Sensor eines oder mehrere Mikrofone, einen oder mehrere Inertialsensoren, einen Positionssensor, einen Herzfrequenzsensor, ein Pulsoximeter, einen Leitfähigkeitssensor, einen Temperatursensor, einen Fingerabdrucksensor, eine oder mehrerer Kameras und/oder einen oder mehrerer Berührungssensoren.

Das oder die Mikrofone können beispielsweise zur Bestimmung eines Stimmprofils oder Stimmmusters dienen.

Der oder die Inertialsensoren, welche beispielsweise als Beschleunigungs- und/oder Drehratensensoren ausgestaltet sein können, können beispielsweise zur Erfassung von Bewegungscharakteristika, eines Gangstils, eines Schrittrhythmus, einer Schrittweite und/oder eines Armspiels, also einer Armbewegungsamplitude, des Benutzers dienen.

Der Positionssensor, welcher beispielsweise als GNSS oder GPS Sensor ausgestaltet sein kann, kann beispielsweise zum Erstellen eines Bewegungsprofils oder zum Identifizieren von Aufenthaltsorten des Benutzers dienen.

Der Herzfrequenzsensor kann beispielsweise zur Bestimmung eines Herzrhythmus oder einer Pulsfrequenz des Benutzers oder damit indirekt eines momentanen gesundheitlichen oder sonstigen Zustands des Benutzers dienen.

Das Pulsoximeter kann beispielsweise zur Bestimmung einer Sauerstoffsättigung im Blut des Benutzers dienen.

Der Leitfähigkeitssensor kann beispielsweise kapazitiv ausgeführt sein und kann insbesondere zur Bestimmung eines Körperfettanteils und/oder einer Hautleitfähigkeit des Benutzers dienen.

Der Temperatursensor kann beispielsweise zur Bestimmung einer Haut- oder Körpertemperatur des Benutzers dienen.

Die Kamera oder die Kameras können beispielsweise zur Identifizierung einer Gesichtsgeometrie des Benutzers dienen.

Die Berührungssensoren, beispielsweise in einem berührungsempfindlichen Display des elektronischen Geräts implementiert, können beispielsweise zum Bestimmen einer Ohrform oder eines Tippverhaltens des Benutzers dienen.

Gemäß zumindest einer Ausführungsform beinhalten die zwei oder mehr biometrischen Charakteristika ein Stimmmuster des Benutzers, ein Bewegungsprofil des Benutzers, ein Aktivitätsmuster des Benutzers, einen Herzrhythmus des Benutzers, einen Körperfettanteil des Benutzers, eine Hautleitfähigkeit des Benutzers, einen Schrittrhythmus des Benutzers, eine Schrittweite des Benutzers, ein Armspiel des Benutzers, einen Fingerabdruck des Benutzers, eine Gesichtsgeometrie des Benutzers, eine Ohrform des Benutzers und/oder ein Tippverhalten des Benutzers.

Gemäß zumindest einer Ausführungsform beinhalten die zwei oder mehr biometrischen Charakteristika ein Atemmuster des Benutzers, eine Abbildung oder Charakteristik einer Iris des Benutzers, ein Venenmuster des Benutzers, beispielsweise ein Venenmuster eines Augenhintergrunds, einer Hand und/oder eines anderen Körperteils des Benutzers, Augenbewegungen des Benutzers, einen Lidschlag des Benutzers, eine Mimik des Benutzers und/oder eine charakteristische unbewusste Bewegung des Benutzers.

Insbesondere beinhalten die zwei oder mehr biometrischen Charakteristika jeweils einen zeitlichen Verlauf oder einen zeitlichen Mittelwert oder eine sonstige statistische Größe eines oder mehrerer der genannten Charakteristika.

Die genannten Charakteristika können allein oder in verschiedenen Kombinationen die Authentizität des Benutzers mit sehr hoher Wahrscheinlichkeit verifizieren beziehungsweise falsifizieren.

Gemäß zumindest einer Ausführungsform wird der Zugriff mittels der Authentifizierungseinheit abhängig von einer Identität und/oder abhängig von einem Zustand des Benutzers freigegeben.

Insbesondere wird der Zugriff abhängig von der Identität oder dem Zustand freigegeben, wenn der Zugriff auf die Vorrichtung automatisch freigegeben wird, wenn der Konfidenzwert größer oder gleich dem vorgegebenen Mindestwert ist oder wenn die aktive Authentifizierung erfolgreich durchgeführt wird.

In solchen Ausführungsformen können verschiedene Zugriffskategorien definiert werden, sodass ein rollenabhängiger Zugriff auf die Vorrichtung möglich wird. Je nach dem, um welche Person es sich bei dem Benutzer handelt, dem der Zugriff gewährt werden soll, können unterschiedliche Zugriffskategorien mit jeweils unterschiedlichen Zugriffsrechten freigegeben werden.

Entsprechend kann auch anhand des Zustands beziehungsweise der körperlichen Konstitution des Benutzers eine der Zugriffskategorien ausgewählt werden.

Dadurch wird es beispielsweise möglich, den Zugriff auf die Vorrichtung nur eingeschränkt zu gewähren, beispielsweise nur einen lesenden Zugriff zu gewähren, wenn eine schlechte Verfassung oder ein hoher Müdigkeitsgrad des Benutzers festgestellt wird.

Dadurch kann zum einen die Personensicherheit erhöht werden, als auch das Risiko einer fehlerhaften Bedienung der Vorrichtung reduziert werden.

Gemäß zumindest einer Ausführungsform werden die biometrischen Informationen mittels des Geräts drahtlos an das Computersystem übertragen und der Konfidenzwert oder ein von dem Konfidenzwert abhängiges Signal oder abhängig von dem Konfidenzwert erzeugte Daten werden mittels des Computersystems an die Authentifizierungseinheit übertragen.

Insbesondere enthält ein Server oder Back-End Server das Computersystem. Bei dem Server handelt es sich insbesondere um ein weiteres Computersystem, das Ressourcen zur Datenverarbeitung oder Datenspeicherung zur Verfügung stellt, um den Konfidenzwert zu bestimmen.

Das elektronische Gerät wird also dazu verwendet, die biometrischen Informationen zu sammeln und an den Server, insbesondere drahtlos, zu übertragen. Die Authentifizierung, insbesondere die Ermittlung des Konfidenzwerts, findet somit gewissermaßen online statt.

Mit Vorteil erfordern solche Ausführungsformen keine erhöhte Rechenkapazität auf dem mobilen elektronischen Gerät.

Gemäß zumindest einer Ausführungsform werden der Konfidenzwert oder das von dem Konfidenzwert abhängige Signal oder die abhängig von dem Konfidenzwert erzeugten Daten mittels des Geräts drahtlos an die Authentifizierungseinheit übertragen und das Gerät beinhaltet das Computersystem.

Das Computersystem kann in solchen Ausführungsformen beispielsweise als Mikroprozessoreinheit des Geräts ausgestaltet sein.

Dementsprechend werden die biometrischen Informationen mittels des Geräts gesammelt und ausgewertet, indem der Konfidenzwert bestimmt wird. Es handelt sich also gewissermaßen um eine offline Authentifizierung.

Solche Ausführungsformen haben den Vorteil, dass eine drahtlos Kommunikationsverbindung zu einem Server nicht erforderlich ist.

Gemäß einem weiteren unabhängigen Aspekt des verbesserten Konzepts wird ein System zur Benutzerauthentifizierung angegeben, welches ein Computersystem und eine Authentifizierung aufweist. Das System zur Benutzerauthentifizierung weist außerdem ein mobiles elektronisches Gerät auf, das dazu eingerichtet ist, während eines Aufnahmezeitraums biometrische Informationen eines Benutzers des Geräts zu erfassen. Das Computersystem ist dazu eingerichtet, in Abhängigkeit von den biometrischen Informationen einen Konfidenzwert für eine Authentizität des Benutzers zu bestimmen. Die Authentifizierungseinheit ist dazu eingerichtet, festzustellen, dass sich das Gerät in einer vorgegebenen Umgebung einer zugriffsgeschützten Vorrichtung befindet und ein Zugriff auf die Vorrichtung in Abhängigkeit von dem Konfidenzwert freizugeben.

Gemäß zumindest einer Ausführungsform des Systems zur Benutzerauthentifizierung weist das System wenigstens einen Server auf, der das Computersystem beinhaltet. Das Gerät ist dazu eingerichtet, die biometrischen Informationen drahtlos an das Computersystem zu übertragen und das Computersystem ist dazu eingerichtet, den Konfidenzwert oder ein von dem Konfidenzwert abhängiges Signal an die Authentifizierungseinheit zu übertragen, insbesondere drahtlos oder drahtgebunden.

Gemäß zumindest einer Ausführungsform beinhaltet das Gerät das Computersystem und ist dazu eingerichtet, den Konfidenzwert oder ein von dem Konfidenzwert abhängiges Signal drahtlos an die Authentifizierungseinheit zu übertragen.

Weitere Ausführungsformen des Systems zur Benutzerauthentifizierung folgen unmittelbar aus dem Verfahren zur Benutzerauthentifizierung nach dem verbesserten Konzept sowie den entsprechenden Ausgestaltungsformen und umgekehrt. Insbesondere kann das System dazu eingerichtet oder programmiert sein, ein Verfahren nach dem verbesserten Konzept durchzuführen oder ein System nach dem verbesserten Konzept führt ein Verfahren nach dem verbesserten Konzept durch.

Gemäß einem weiteren unabhängigen Aspekt des verbesserten Konzepts wird ein Softwaresystem zur Benutzerauthentifizierung angegeben. Das Softwaresystem weist ein erstes Computerprogramm mit ersten Befehlen auf, welche bei Ausführung des ersten Computerprogramms durch ein mobiles elektronisches Gerät, insbesondere eines Systems zur Benutzerauthentifizierung nach dem verbesserten Konzept, das elektronische Gerät dazu veranlassen, während eines Aufnahmezeitraums biometrische Informationen eines Benutzers des Geräts zu erfassen.

Gemäß zumindest einer Ausführungsform weist das Softwaresystem ein zweites Computerprogramm mit zweiten Befehlen auf, die bei Ausführung des zweiten Computerprogramms durch ein Computersystem, insbesondere ein Computersystem eines Systems zur Benutzerauthentifizierung nach dem verbesserten Konzept, das Computersystem zu veranlassen, in Abhängigkeit von den biometrischen Informationen einen Konfidenzwert für eine Authentizität des Benutzers zu bestimmen.

Gemäß zumindest einer Ausführungsform weist das Softwaresystem ein drittes Computerprogramm mit Befehlen auf, die bei Ausführung des dritten Computerprogramms durch eine Authentifizierungseinheit, insbesondere eine Authentifizierungseinheit eines Systems zur Benutzerauthentifizierung nach dem verbesserten Konzept, die Authentifizierungseinheit dazu veranlassen, festzustellen, dass sich das Gerät in einer vorgegebenen Umgebung einer zugriffsgeschützten Vorrichtung befindet und einen Zugriff auf die Vorrichtung in Abhängigkeit von dem Konfidenzwert freizugeben.

Das Softwaresystem, insbesondere das erste, das zweite und/oder das dritte Computerprogramm ist beziehungsweise sind beispielsweise auf einem oder mehreren computerlesbaren Speichermedien, beispielsweise des Systems zur Benutzerauthentifizierung nach dem verbesserten Konzept, gespeichert.

In zumindest einer Ausführungsform des Softwaresystems veranlassen die ersten Befehle bei Ausführung des ersten Computerprogramms durch das elektronische Gerät dieses dazu, alle jeweils erforderlichen Verfahrensschritte eines Verfahrens nach dem verbesserten Konzept durchzuführen, die entsprechend der jeweiligen Ausführungsform des Verfahrens mittels des elektronischen Geräts durchgeführt werden.

In zumindest einer Ausführungsform des Softwaresystems veranlassen die zweiten Befehle bei Ausführung des zweiten Computerprogramms durch das Computersystem dieses dazu, alle jeweils erforderlichen Verfahrensschritte eines Verfahrens nach dem verbesserten Konzept durchzuführen, die entsprechend der jeweiligen Ausführungsform des Verfahrens mittels des Computersystems durchgeführt werden.

In zumindest einer Ausführungsform des Softwaresystems veranlassen die dritten Befehle bei Ausführung des dritten Computerprogramms durch die Authentifizierungseinheit diese dazu, alle jeweils erforderlichen Verfahrensschritte eines Verfahrens nach dem verbesserten Konzept durchzuführen, die entsprechend der jeweiligen Ausführungsform des Verfahrens mittels der Authentifizierungseinheit durchgeführt werden.

Weitere Ausführungsformen des Softwarensystems ergeben sich unmittelbar aus den verschiedenen Ausführungsformen des Verfahrens nach dem verbesserten Konzept beziehungsweise des Systems der Benutzerauthentifizierung nach dem verbesserten Konzept und jeweils umgekehrt.

Gemäß einem weiteren unabhängigen Aspekt des verbesserten Konzepts wird ein computerlesbares Speichermedium oder ein Satz computerlesbarer Speichermedien angegeben, auf welchen ein Softwaresystem nach dem verbesserten Konzept, insbesondere das erste, das zweite und das dritte Computerprogramm, gespeichert ist.

Insbesondere weist der Satz von computerlesbaren Speichermedien ein erstes, ein zweites und ein drittes computerlesbares Speichermedium auf. Das erste Speichermedium speichert das erste Computerprogramm, das zweite Speichermedium speichert das zweite Computerprogramm und das dritte Speichermedium speichert das dritte Computerprogramm.

Alternativ können zwei oder alle drei der Computerprogramme auch auf einem gemeinsamen Speichermedium gespeichert sein.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen
- FIG 1: eine schematische Darstellung einer beispielhaften Ausführungsform eines Systems nach dem verbesserten Konzept;
- FIG 2: eine schematische Darstellung einer weiteren beispielhaften Ausführungsform eines Systems nach dem verbesserten Konzept;
- FIG 3: ein Ablaufdiagramm einer beispielhaften Ausführungsform eines Verfahrens nach dem verbesserten Konzept; und
- FIG 4: ein Ablaufdiagramm einer weiteren beispielhaften Ausführungsform eines Verfahrens nach dem verbesserten Konzept.

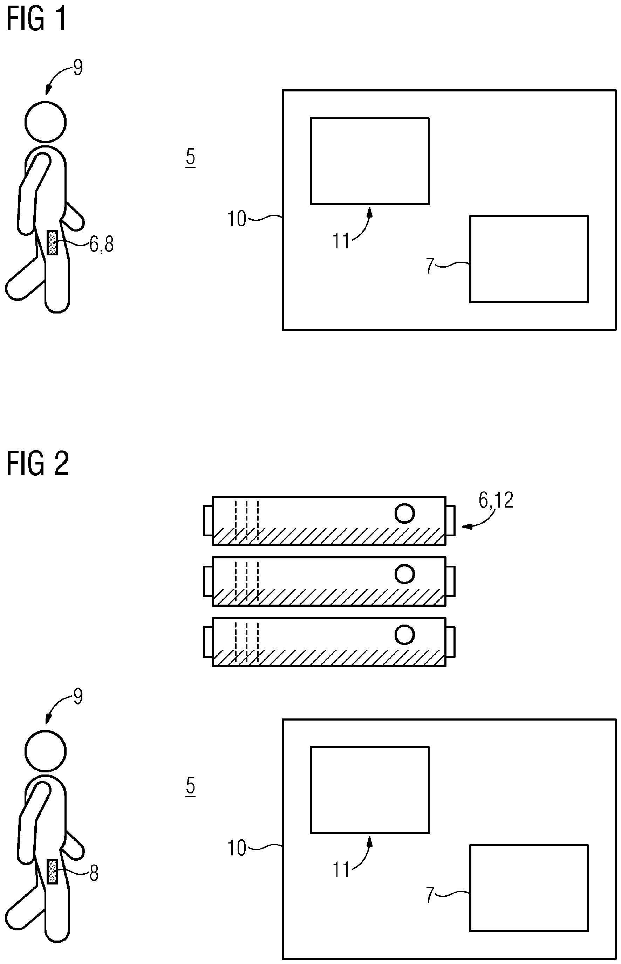

In FIG 1 ist eine schematische Darstellung einer beispielhaften Ausführungsform eines Systems 5 zur Benutzerauthentifizierung nach dem verbesserten Konzept gezeigt. Das System 5 weist ein mobiles elektronisches Gerät 8 auf, welches beispielsweise als Smartphone oder dergleichen ausgebildet sein kann und von einem Benutzer 9 mitgeführt werden kann.

Das Gerät 8 beinhaltet ein Computersystem 6, welches beispielsweise auch als Prozessoreinheit des Smartphones ausgestaltet sein kann.

FIG 1 zeigt auch eine Vorrichtung 10, beispielsweise eine Maschine oder Anlage, die vor unberechtigter Benutzung zugriffsgeschützt ist.

Das System 5 weist eine Authentifizierungseinheit 7 auf, die beispielsweise als Recheneinheit der Vorrichtung 10 ausgestaltet sein kann.

Die Vorrichtung 10 weist beispielsweise ein Display 11 auf.

In FIG 2 ist eine schematische Darstellung einer weiteren beispielhaften Ausführungsform eines Systems zur Benutzerauthentifizierung 5 nach dem verbesserten Konzept gezeigt.

Zusätzlich zu dem System 5 der FIG 1 weist das System 5 der FIG 2 einen Server 12 auf. Das Computersystem 6 des Systems 5 ist in diesem Ausführungsbeispiel als Recheneinheit des Servers 12 ausgestaltet.

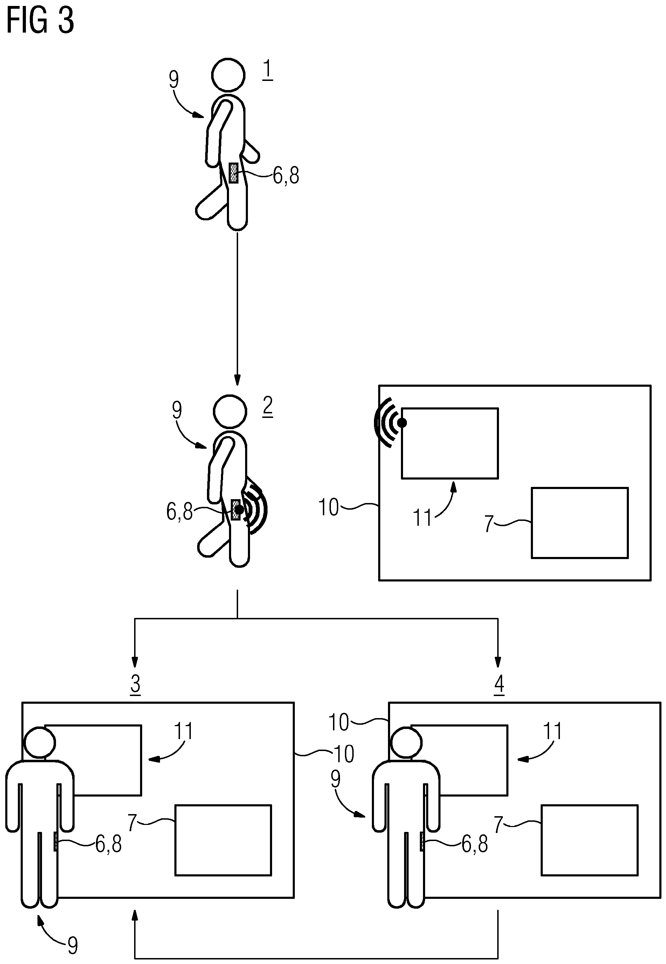

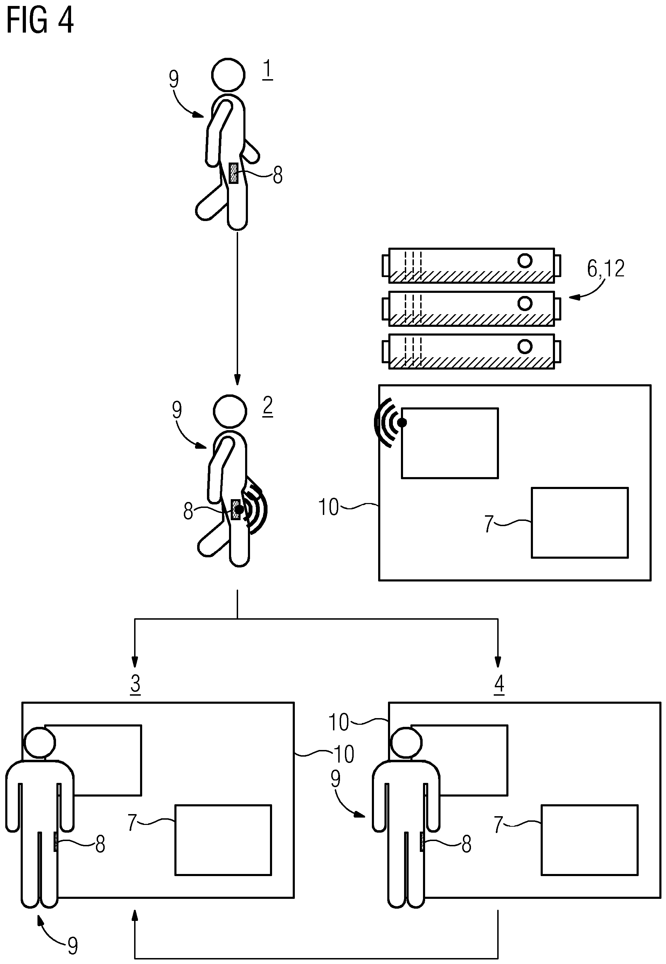

Im Folgenden wird die Funktionsweise der Systeme 5 nach dem verbesserten Konzept gemäß FIG 1 und FIG 2 anhand beispielhafter Ausführungsformen von Verfahren nach dem verbesserten Konzept gemäß der FIG 3 und FIG 4 näher erläutert.

In FIG 3 ist ein Ablaufdiagramm eines beispielhaften Verfahrens zur Benutzerauthentifizierung nach dem verbesserten Konzept gezeigt, das von einer Ausführungsform des Systems 5 zur Benutzerauthentifizierung gemäß FIG 1 Gebrauch macht.

In Schritt 1 des Verfahrens zeichnet das mobile Gerät 8 während eines Aufnahmezeitraums biometrische Informationen des Benutzers 9 auf. Dazu können insbesondere einer oder mehrere Sensoren des Geräts 8 beziehungsweise mit dem Gerät 8 gekoppelte Sensoren verwendet werden. Insbesondere können Mikrofone, Beschleunigungs- oder Drehratensensoren, Fingerabdrucksensoren, Kameras oder dergleichen verwendet werden, um ein Stimmmuster, ein Bewegungsprofil oder Aktivitätsmuster, einen Fingerabdruck oder dergleichen des Benutzers als biometrische Charakteristika, die zu den biometrischen Informationen gehören, zu erfassen.

Während des Aufnahmezeitraums wird mittels des Computersystems 6 wiederholt beziehungsweise kontinuierlich ein Konfidenzwert für die Authentizität des Benutzers 9 abhängig von den biometrischen Informationen bestimmt. Dazu werden die biometrischen Informationen mit bereits bekannten Referenzdaten, welche insbesondere früher aufgenommen und unabhängig sein können, verglichen. Insbesondere können die einzelnen biometrischen Charakteristika mit jeweiligen Referenzdatensätzen verglichen werden, um jeweilige Einzelkonfidenzwerte zu bestimmen. Aus den Einzelkonfidenzwerten kann das Computersystem 6 dann den Konfidenzwert bestimmen.

Durch die kontinuierliche Aufzeichnung der biometrischen Informationen während des Aufnahmezeitraums kann der Algorithmus zur Bestimmung des Konfidenzwerts beziehungsweise können die Referenzdaten permanent adaptiert werden, sodass die Bestimmung des Konfidenzwertes beziehungsweise die Einschätzung der Authentizität des Benutzers aufgrund der biometrischen Informationen mit der Zeit immer genauer werden und der Konfidenzwert beispielsweise mit der Zeit größer werden kann.

In Schritt 2 des Verfahrens nähert sich der Benutzer 9 mit dem Gerät 8 der Vorrichtung 10. Dies wird beispielsweise von der Authentifizierungseinheit 7 erkannt, die drahtlos mit dem Gerät 8 kommunizieren kann. Das Gerät 8 beziehungsweise das Computersystems 6 überträgt den Konfidenzwert oder abhängig davon erzeugte Authentifizierungsdaten an die Authentifizierungseinheit 7. Die Authentifizierungsdaten können implementierungsspezifisch den Konfidenzwert selbst, eine Benutzer-ID, eine Software-ID, eine Geräte-ID, einen temporären Zugriffsschlüssel, einen Benutzernamen und/oder ein Passwort enthalten.

Die Authentifizierungseinheit 7 vergleicht daraufhin beispielsweise den Konfidenzwert mit einem vorgegebenen Mindestwert. Ist der Konfidenzwert größer oder gleich dem vorgegebenen Mindestwert, wird in Schritt 3 des Verfahrens der Zugriff zu der Vorrichtung 10 automatisch freigegeben.

Ist der Konfidenzwert jedoch kleiner als der vorgegebene Mindestwert, so fordert die Authentifizierungseinheit 7 den Benutzer 9 in Schritt 4 des Verfahrens zur Durchführung einer aktiven Authentifizierungshandlung auf. Beispielsweise kann die Authentifizierungseinheit 7 auf dem Display 11 der Vorrichtung 10 eine entsprechende Anweisung und einen entsprechenden Hinweis anzeigen. Beispielsweise kann der Benutzer 9 zur Eingabe eines Passworts oder einer PIN oder zum Abgeben eines Fingerabdrucks oder zur Durchführung einer Gesichtsidentifikation oder einer sonstigen Authentifizierungshandlung aufgefordert werden. Führt der Benutzer 9 die aktive Authentifizierungshandlung daraufhin erfolgreich durch, so wird der Zugriff auf die Vorrichtung 10 mittels der Authentifizierungseinheit 7 ebenfalls freigegeben.

Führt der Benutzer 9 die aktive Authentifizierungshandlung dagegen nicht oder nicht erfolgreich durch, so bleibt der Zugriff zu der Vorrichtung 10 gesperrt.

In einer beispielhaften Ausführung werden ein Benutzername und ein Passwort in einer Software auf dem Gerät 8. Die Authentifizierungseinheit 7 fordert von der Software die Authentifizierungsdaten an. Die Software erzeugt wie beschrieben den Konfidenzwert intern und übermittelt die für die Vorrichtung 10 intern verschlüsselt gespeicherten Zugriffsdaten, falls der Mindestwert für den Konfidenzwert überschritten ist. In diesem Fall wäre das Verfahren passiv und könnte besonders leicht auch in bestehende Systeme integriert werden.

In FIG 4 ist ein beispielhaftes Ablaufdiagramm einer weiteren beispielhaften Ausführungsform eines Verfahrens zur Benutzerauthentifizierung nach dem verbesserten Konzept gezeigt.

Das Verfahren nutzt dabei insbesondere ein System zur Benutzerauthentifizierung gemäß FIG 2. Das Computersystem 6 ist daher wie beschrieben als Recheneinheit des Servers 12 ausgestaltet.

In Schritt 1 des Verfahrens überträgt das Gerät 8 beispielsweise die erfassten biometrischen Informationen an den Server 12, woraufhin das Computersystem 6 des Servers 12 den Konfidenzwert bestimmt. Darüber hinaus entspricht der Schritt 1 des Verfahrens dem des Verfahrens gemäß FIG 3.

In Schritt 2 des Verfahrens fordert die Authentifizierungseinheit 7 den Konfidenzwert von dem Server 12 beziehungsweise dem Computersystem 6 an.

Darüber hinaus entsprechen die Verfahrensschritte 2 bis 4 denjenigen des Verfahrens gemäß FIG 3.

In einer beispielhaften Ausführung nähert sich der Benutzer 9 der Vorrichtung 10. Die Authentifizierungseinheit 7 detektiert das Gerät 8 und schickt eine Anfrage mit einer entsprechenden Geräte-ID an den Server 12. Dieser meldet abhängig von dem Konfidenzwert beispielsweise zurück, dass ein bestimmter Benutzer 9 das Gerät 8 aktuell mit einer bestimmten Wahrscheinlichkeit besitzt. Stellt die Authentifizierungseinheit 7 beispielsweise fest, dass die Wahrscheinlichkeit für eine Freigabe nicht ausreicht und meldet dies an den Server 12 zurück. Daraufhin fordert der Server 12 das Gerät 8 auf, dass sich der der Benutzer 9 dort manuell authentifiziert. Damit wird die Wahrscheinlichkeit, dass es sich um den bestimmten Benutzer 9 handelt erhöht. Nachdem dies geschehen ist, aktualisiert der Server 12 beispielsweise entsprechende Referenzwerte und schickt der Vorrichtung 10 die aktualisierten Daten. Ist die Wahrscheinlichkeit diesmal hoch genug, wird die Freigabe erteilt.

Gemäß dem verbesserten Konzept wird eine Benutzerauthentifizierung mit mehreren Faktoren beschrieben. Das mobile Gerät beziehungsweise eine App auf dem mobilen Gerät stellt beispielsweise permanent sicher, dass es von ihrem rechtmäßigen Besitzer mitgeführt wird. Dazu kommen biometrische Verfahren zum Einsatz. Dementsprechend reicht es nicht aus, das mobile elektronische Gerät nur zu besitzen, um Zugriff zu der Vorrichtung zu erlangen.

Ein System nach dem verbesserten Konzept kann in verschiedenen Ausführungsformen auf eine Überwachung des Benutzers auf Bewusstlosigkeit durchführen und beispielsweise den Zugriff auf die Vorrichtung im Falle einer Bewusstlosigkeit des Benutzers sperren und/oder eine Betriebsmodus der Vorrichtung bei Bewusstlosigkeit verändern.

Neben dem Zugriff auf die Vorrichtung können abhängig von dem Konfidenzwert auch auf dem mobilen elektronischen Gerät hinterlegte Applikationen freigegeben oder gesperrt oder abhängig von einer zusätzlichen aktiven Authentifizierung freigegeben werden, wenn der Benutzer anhand der biometrischen Informationen nicht eindeutig als der berechtigte Benutzer erkannt werden konnte.

In derselben Weise können Computerapplikationen freigeschaltet oder gesperrt werden.

Mit dem verbesserten Konzept werden zahlreiche Nachteile konventioneller Authentifizierungsmethoden überwunden. Diesen konventionellen Methoden ist insbesondere gemein, dass der Benutzer aktiv werden muss, um Zugriff zu der Vorrichtung zu erhalten. Dies ist gemäß dem verbesserten Konzept nicht der Fall.

Erfolgt die Authentifizierung beispielsweise konventionell über einen Schlüsselschalter, über das Einlegen und Drehen eines Schlüssels, können sich Unbefugte den Schlüssel aneignen. Zudem bieten bekannte Systeme nur einen Schlüssel und damit nur eine Berechtigungsstufe an. Wird eine RFID Karte zur Authentifizierung verwendet, können Unbefugte die Karte anwenden. Zudem können solche Karten defekt werden. Hat der Benutzer die Karte vergessen, kann er keinen Zugriff zu der Vorrichtung erhalten. RFID Karten können von Benutzern weitergegeben werden, sodass keine Zuordnung zum Benutzer beziehungsweise Bediener der Vorrichtung möglich ist. Zudem ist eine Sicherheit von RFID Karten zur Authentifizierung begrenzt, da entsprechende Chips relativ einfach kopiert werden können.

Die Authentifizierung über ein Login und Passwort, also über die Eingabe einer richtigen Kombination aus Benutzername und Passwort, hat den Nachteil, dass sich Unbefugte Login und Passwort aneignen können oder alte Kombinationen nach wie vor gültig sind. Die Eingabe dauert zudem relativ lange. Bei Tippfehlern muss der Benutzer erneut die Authentifizierungshandlung durchführen. In verschiedenen Anwendungsfällen kann eine unvorteilhafte Verschmutzung einer Benutzerschnittstelle der Vorrichtung durch die Berührung zur Eingabe des Login und Passworts nachteilhaft sein.

Diese und weitere Nachteile bekannter Authentifizierungsverfahren können teilweise oder vollständig mittels des verbesserten Konzepts vermieden werden. Dies wird ermöglicht, indem zur Authentifizierung ein passives Verfahren genutzt wird und der Benutzer nur in Ausnahmefällen aktiv werden muss. Im Regelfall reicht es aus, wenn der Benutzer mit dem Gerät an eine Bedienstation der Vorrichtung tritt.

### Bezugszeichenliste

- 1: Verfahrensschritt
- 2: Verfahrensschritt
- 3: Verfahrensschritt
- 4: Verfahrensschritt
- 5: System zur Benutzerauthentifizierung
- 6: Computersystem
- 7: Authentifizierungseinheit
- 8: mobiles elektronisches Gerät
- 9: Benutzer
- 10: zugriffsgeschützte Vorrichtung
- 11: Display
- 12: Server

## Patentansprüche

1. Verfahren zur Benutzerauthentifizierung,
wobei mittels eines mobilen elektronischen Geräts (8) während eines Aufnahmezeitraums biometrische Informationen eines Benutzers (9) des Geräts (8) erfasst werden;
in Abhängigkeit von den biometrischen Informationen ein Konfidenzwert für eine Authentizität des Benutzers (9) mittels eines Computersystems (6) bestimmt wird;
mittels einer Authentifizierungseinheit (7) festgestellt wird, dass sich das Gerät (8) in einer vorgegebenen Umgebung einer zugriffsgeschützten Vorrichtung (10) befindet;
mittels der Authentifizierungseinheit (7) ein Zugriff auf die Vorrichtung (10) in Abhängigkeit von dem Konfidenzwert freigegeben wird,
mittels der Authentifizierungseinheit (7) eine Aufforderung zu einer aktiven Authentifizierung ausgegeben wird, wenn der Konfidenzwert kleiner als ein vorgegebener Mindestwert ist, und
ein Algorithmus und/oder Referenzdaten zum Bestimmen des Konfidenzwerts mittels des Computersystems (6) in Abhängigkeit von den biometrischen Informationen angepasst wird, wenn die aktive Authentifizierung erfolgreich durchgeführt wird.

2. Verfahren nach Anspruch 1, wobei der Zugriff auf die Vorrichtung (10) mittels des Computersystems (6) automatisch freigegeben wird, wenn der Konfidenzwert größer oder gleich einem vorgegebenen Mindestwert ist.

3. Verfahren nach Anspruch 1 oder 2, wobei der Zugriff mittels der Authentifizierungseinheit (7) freigegeben wird, wenn die aktive Authentifizierung erfolgreich durchgeführt wird.

4. Verfahren nach einem der Ansprüche 1 bis 3,
wobei während des Aufnahmezeitraums mittels des Geräts (8) zwei oder mehr verschiedene biometrische Charakteristika erfasst werden, um die biometrischen Informationen zu erfassen;
in Abhängigkeit von jedem der zwei oder mehr biometrischen Charakteristika ein jeweiliger Einzelkonfidenzwert für die Authentizität des Benutzers (9) mittels des Computersystems (6) bestimmt wird; und
der Konfidenzwert mittels des Computersystems (6) abhängig von den Einzelkonfidenzwerten bestimmt wird.

5. Verfahren nach Anspruch 4, wobei die zwei oder mehr biometrischen Charakteristika jeweils mittels wenigstens eines Sensors des Geräts (8) und/oder mittels wenigstens eines mit dem Gerät (8) gekoppelten Sensors erfasst wird.

6. Verfahren nach einem der Ansprüche 4 oder 5,
wobei die zwei oder mehr biometrischen Charakteristika jeweils mittels
eines oder mehrerer Mikrofone; und/oder
eines oder mehrerer Inertialsensoren; und/oder
eines Positionssensors; und/oder
eines Herzfrequenzsensors; und/oder
eines Pulsoximeters; und/oder
eines Leitfähigkeitssensors; und/oder
eines Temperatursensors; und/oder
eines Fingerabdrucksensors; und/oder
einer oder mehrerer Kameras; und/oder
eines oder mehrerer Berührungssensoren
bestimmt werden.

7. Verfahren nach einem der Ansprüche 4 bis 6,
wobei die zwei oder mehr biometrischen Charakteristika
ein Bewegungsprofil; und/oder
ein Aktivitätsmuster; und/oder
einen Herzrhythmus; und/oder
einen Körperfettanteil; und/oder
eine Hautleitfähigkeit; und/oder
einen Schrittrhythmus; und/oder
eine Schrittweite; und/oder
ein Armspiel; und/oder
einen Fingerabdruck; und/oder
eine Gesichtsgeometrie; und/oder
eine Ohrform; und/oder
ein Tippverhalten
beinhalten.

8. Verfahren nach einem der Ansprüche 1 bis 7, wobei der Zugriff mittels der Authentifizierungseinheit (7) abhängig von einer Identität und/oder einem Zustand des Benutzers (9) freigegeben wird.

9. Verfahren nach einem der Ansprüche 1 bis 8,
wobei die biometrischen Informationen mittels des Geräts (8) drahtlos an das Computersystem (6) übertragen werden und der Konfidenzwert oder ein von dem Konfidenzwert abhängiges Signal oder von dem Konfidenzwert abhängige Daten mittels des Computersystems (6) an die Authentifizierungseinheit (7) übertragen wird; oder
der Konfidenzwert oder das von dem Konfidenzwert abhängige Signal oder die von dem Konfidenzwert abhängigen Daten mittels des Geräts (8) drahtlos an die Authentifizierungseinheit (7) übertragen wird und das Gerät (8) das Computersystem (6) beinhaltet.

10. System zur Benutzerauthentifizierung, aufweisend ein Computersystem (6) und eine Authentifizierungseinheit (7),
wobei das System (5) zur Benutzerauthentifizierung ein mobiles elektronisches Gerät (8) aufweist, dazu eingerichtet, während eines Aufnahmezeitraums biometrische Informationen eines Benutzers (9) des Geräts (8) zu erfassen;
das Computersystem (6) dazu eingerichtet ist, in Abhängigkeit von den biometrischen Informationen einen Konfidenzwert für eine Authentizität des Benutzers (9) zu bestimmen;
die Authentifizierungseinheit (7) dazu eingerichtet ist, festzustellen, dass sich das Gerät (8) in einer vorgegebenen Umgebung einer zugriffsgeschützten Vorrichtung (10) befindet und
einen Zugriff auf die Vorrichtung (10) in Abhängigkeit von dem Konfidenzwert freizugeben, wenn der Konfidenzwert kleiner als ein vorgegebener Mindestwert ist, und
ein Algorithmus und/oder Referenzdaten zum Bestimmen des Konfidenzwerts mittels des Computersystems (6) in Abhängigkeit von den biometrischen Informationen angepasst wird, wenn die aktive Authentifizierung erfolgreich durchgeführt wird.

11. System zur Benutzerauthentifizierung nach Anspruch 10,
wobei das System (5) wenigstens einen Server (12) aufweist, der das Computersystem (6) beinhaltet;
das Gerät (8) dazu eingerichtet ist, die biometrischen Informationen drahtlos an das Computersystem (6) zu übertragen; und
das Computersystem (6) dazu eingerichtet ist, den Konfidenzwert oder ein von dem Konfidenzwert abhängiges Signal oder von dem Konfidenzwert abhängige Daten an die Authentifizierungseinheit (7) zu übertragen.

12. System zur Benutzerauthentifizierung nach Anspruch 10, wobei das Gerät (8) das Computersystem (6) beinhaltet und dazu eingerichtet ist, den Konfidenzwert oder ein von dem Konfidenzwert abhängiges Signal oder von dem Konfidenzwert abhängige Daten drahtlos an die Authentifizierungseinheit (7) zu übertragen.

13. Softwaresystem zur Benutzerauthentifizierung,
wobei das Softwaresystem ein erstes Computerprogramm mit ersten Befehlen aufweist, die bei Ausführung des ersten Computerprogramms durch ein mobiles elektronisches Gerät (8) dieses dazu veranlassen, während eines Aufnahmezeitraums biometrische Informationen eines Benutzers (9) des Geräts (8) zu erfassen;
ein zweites Computerprogramm mit zweiten Befehlen aufweist, die bei Ausführung des zweiten Computerprogramms durch ein Computersystem (6) dieses dazu veranlassen, in Abhängigkeit von den biometrischen Informationen einen Konfidenzwert für eine Authentizität des Benutzers (9) zu bestimmen; und
ein drittes Computerprogramm mit dritten Befehlen aufweist, die bei Ausführung des dritten Computerprogramms durch eine Authentifizierungseinheit (7) diese dazu veranlassen, festzustellen, dass sich das Gerät (8) in einer vorgegebenen Umgebung einer zugriffsgeschützten Vorrichtung (10) befindet und einen Zugriff auf die Vorrichtung (10) in Abhängigkeit von dem Konfidenzwert freizugeben, wenn der Konfidenzwert kleiner als ein vorgegebener Mindestwert ist, und
ein Algorithmus und/oder Referenzdaten zum Bestimmen des Konfidenzwerts mittels des Computersystems (6) in Abhängigkeit von den biometrischen Informationen angepasst wird, wenn die aktive Authentifizierung erfolgreich durchgeführt wird.

## Claims

1. Method for user authentication,
wherein
a mobile electronic device (8) is used to acquire biometric information relating to a user (9) of the device (8) during a logging period;
the biometric information is taken as a basis for determining a confidence value for an authenticity of the user (9) by means of a computer system (6);
an authentication unit (7) is used to establish that the device (8) is located in predetermined surroundings of an access-protected apparatus (10);
the authentication unit (7) is used to approve access to the apparatus (10) on the basis of the confidence value,
the authentication unit (7) is used to output a request for an active authentication if the confidence value is less than a predetermined minimum value, and
an algorithm and/or reference data for determining the confidence value is adjusted by means of the computer system (6) on the basis of the biometric information if the active authentication is performed successfully.

2. Method according to Claim 1,
wherein
access to the apparatus (10) is automatically approved by means of the computer system (6) if the confidence value is greater than or equal to a predetermined minimum value.

3. Method according to Claim 1 or 2,
wherein
access is approved by means of the authentication unit (7) if the active authentication is performed successfully.

4. Method according to one of Claims 1 to 3,
wherein
during the logging period the device (8) is used to detect two or more different biometric characteristics in order to acquire the biometric information;
each of the two or more biometric characteristics is taken as a basis for determining a respective individual confidence value for the authenticity of the user (9) by means of the computer system (6); and
the confidence value is determined by means of the computer system (6) on the basis of the individual confidence values.

5. Method according to Claim 4,
wherein
the two or more biometric characteristics are each detected by means of at least one sensor of the device (8) and/or by means of at least one sensor coupled to the device (8).

6. Method according to either of Claims 4 and 5,
wherein
the two or more biometric characteristics are each determined by means of
one or more microphones; and/or
one or more inertial sensors; and/or
a position sensor; and/or
a heart rate sensor; and/or
a pulse oximeter; and/or
a conductivity sensor; and/or
a temperature sensor; and/or
a fingerprint sensor; and/or
one or more cameras; and/or
one or more touch sensors.

7. Method according to one of Claims 4 to 6,
wherein
the two or more biometric characteristics include
a voice pattern; and/or
a movement profile; and/or
an activity pattern; and/or
a heart rhythm; and/or
a body fat percentage; and/or
a skin conductivity; and/or
a walking rhythm; and/or
a pace length; and/or
arm movements; and/or
a fingerprint; and/or
a facial geometry; and/or
an ear shape; and/or
a keystroke behaviour.

8. Method according to one of Claims 1 to 7,
wherein
access is approved by means of the authentication unit (7) on the basis of an identity and/or a state of the user (9).

9. Method according to one of Claims 1 to 8,
wherein
the biometric information is wirelessly transmitted to the computer system (6) by means of the device (8) and the confidence value or a signal that is dependent on the confidence value or data that are dependent on the confidence value is transmitted to the authentication unit (7) by means of the computer system (6); or
the confidence value or the signal that is dependent on the confidence value or the data that are dependent on the confidence value is wirelessly transmitted to the authentication unit (7) by means of the device (8) and the device (8) includes the computer system (6).

10. System for user authentication, having a computer system (6) and an authentication unit (7),
wherein
the system (5) for user authentication has a mobile electronic device (8), designed to acquire biometric information relating to a user (9) of the device (8) during a logging period;
the computer system (6) is designed to take the biometric information as a basis for determining a confidence value for an authenticity of the user (9);
the authentication unit (7) is designed to establish that the device (8) is located in predetermined surroundings of an access-protected apparatus (10) and
to approve access to the apparatus (10) on the basis of the confidence value if the confidence value is less than a predetermined minimum value, and
an algorithm and/or reference data for determining the confidence value is adjusted by means of the computer system (6) on the basis of the biometric information if the active authentication is performed successfully.

11. System for user authentication according to Claim 10,
wherein
the system (5) has at least one server (12) that includes the computer system (6);
the device (8) is designed to wirelessly transmit the biometric information to the computer system (6); and
the computer system (6) is designed to transmit the confidence value or a signal that is dependent on the confidence value or data that are dependent on the confidence value to the authentication unit (7).

12. System for user authentication according to Claim 10,
wherein
the device (8) includes the computer system (6) and is designed to wirelessly transmit the confidence value or a signal that is dependent on the confidence value or data that are dependent on the confidence value to the authentication unit (7) .

13. Software system for user authentication,
wherein the software system
has a first computer program containing first instructions that, when the first computer program is executed by a mobile electronic device (8), cause said mobile electronic device to acquire biometric information relating to a user (9) of the device (8) during a logging period;
has a second computer program containing second instructions that, when the second computer program is executed by a computer system (6), cause said computer system to take the biometric information as a basis for determining a confidence value for an authenticity of the user (9); and
has a third computer program containing third instructions that, when the third computer program is executed by an authentication unit (7), cause said authentication unit to establish that the device (8) is located in predetermined surroundings of an access-protected apparatus (10) and to approve access to the apparatus (10) on the basis of the confidence value if the confidence value is less than a predetermined minimum value, and
an algorithm and/or reference data for determining the confidence value is adjusted by means of the computer system (6) on the basis of the biometric information if the active authentication is performed successfully.

## Revendications

1. Procédé pour l'authentification d'utilisateur, dans lequel au moyen d'un appareil électronique mobile (8) sont détectées des informations biométriques d'un utilisateur (9) de l'appareil (8) pendant un intervalle d'enregistrement ;
en fonction des informations biométriques est déterminée une valeur de confiance pour une authenticité de l'utilisateur (9) au moyen d'un système informatique (6) ;
au moyen d'une unité d'authentification (7) il est constaté que l'appareil (8) se trouve dans un environnement prédéfini d'un dispositif à accès protégé (10) ;
au moyen de l'unité d'authentification (7), un accès au dispositif (10) est libéré en fonction de la valeur de confiance, au moyen de l'unité d'authentification (7) est émise une demande d'authentification active, lorsque la valeur de confiance est inférieure à une valeur minimale prédéfinie, et
un algorithme et/ou des données de référence visant à déterminer la valeur de confiance au moyen du système informatique (6) est adapté en fonction des informations biométriques lorsque l'authentification active est effectuée avec succès.

2. Procédé selon la revendication 1, dans lequel l'accès au dispositif (10) est libéré automatiquement au moyen du système informatique (6) lorsque la valeur de confiance est supérieure ou semblable à une valeur minimale prédéfinie.

3. Procédé selon la revendication 1 ou 2, dans lequel l'accès au moyen de l'unité d'authentification (7) est libéré lorsque l'authentification active est effectuée avec succès.

4. Procédé selon l'une des revendications 1 à 3, dans lequel pendant l'intervalle d'enregistrement au moyen de l'appareil (8) sont détectées deux ou plusieurs caractéristiques biométriques différentes pour détecter les informations biométriques ;
en fonction de chacune des deux ou plusieurs caractéristiques biométriques, une valeur de confiance individuelle respective pour l'authenticité de l'utilisateur (9) est déterminée au moyen du système informatique (6) ; et
la valeur de confiance est déterminée au moyen du système informatique (6) en fonction des valeurs de confiance individuelles.

5. Procédé selon la revendication 4, dans lequel les deux ou plusieurs caractéristiques biométriques sont détectées à chaque fois au moyen d'au moins un capteur de l'appareil (8) et/ou au moyen d'au moins un capteur couplé à l'appareil (8).

6. Procédé selon l'une des revendications 4 ou 5, dans lequel les deux ou plusieurs caractéristiques biométriques sont déterminées à chaque fois au moyen
d'un ou de plusieurs microphones ; et/ou
d'un ou de plusieurs capteurs inertiels ; et/ou
d'un capteur de positionnement ; et/ou
d'un capteur de fréquence cardiaque ; et/ou
d'un oxymètre de pouls : et/ou
d'un capteur de conductivité ; et/ou
d'un capteur de température ; et/ou
d'un capteur d'empreinte digitale ; et/ou
d'un ou de plusieurs appareils photographiques ; et/ou
d'un ou de plusieurs capteurs de contact.

7. Procédé selon l'une des revendications 4 à 6, dans lequel les deux ou plusieurs caractéristiques biométriques comprennent
une empreinte vocale ; et/ou
un profil de mouvement ; et/ou
un modèle d'activité ; et/ou
un rythme cardiaque ; et/ou
un taux de graisse corporelle ; et/ou
une conductivité cutanée ; et/ou
un rythme du pas ; et/ou
une largeur du pas ; et/ou
un mouvement du bras ; et/ou
une empreinte digitale ; et/ou
une géométrie du visage ; et/ou
une forme d'oreille ; et/ou
une manière de frapper le clavier.

8. Procédé selon l'une des revendications 1 à 7, dans lequel l'accès au moyen de l'unité d'authentification (7) est libéré en fonction d'une identité et/ou d'un état de l'utilisateur (9).

9. Procédé selon l'une des revendications 1 à 8, dans lequel les informations biométriques sont transmises sans fil au système informatique (6) au moyen de l'appareil (8) et la valeur de confiance ou un signal dépendant de la valeur de confiance ou des données dépendantes de la valeur de confiance est transmis(e) ou sont transmises à l'unité d'authentification (7) au moyen du système informatique (6) ; ou
la valeur de confiance ou le signal dépendant de la valeur de confiance ou les données dépendantes de la valeur de confiance est transmis (e) ou sont transmises sans fil à l'unité d'authentification (7) au moyen de l'appareil (8) et l'appareil (8) contient le système informatique (6).

10. Système d'authentification d'utilisateur, présentant un système informatique (6) et une unité d'authentification (7), dans lequel
le système (5) d'authentification d'utilisateur présente un appareil électronique mobile (8) configuré pour détecter des informations biométriques d'un utilisateur (9) de l'appareil (8) pendant un intervalle d'enregistrement ;
le système informatique (6) est configuré pour déterminer une valeur de confiance pour une authenticité de l'utilisateur (9) en fonction des informations biométriques ;
l'unité d'authentification (7) est configurée pour constater que l'appareil (8) se trouve dans un environnement prédéfini d'un dispositif à accès protégé (10) et
pour libérer un accès au dispositif (10) en fonction de la valeur de confiance, lorsque la valeur de confiance est inférieure à une valeur minimale prédéfinie, et
un algorithme et/ou des données de référence pour déterminer la valeur de confiance au moyen du système informatique (6) est adapté/sont adaptées en fonction des informations biométriques lorsque l'authentification active est effectuée avec succès.

11. Système d'authentification d'utilisateur selon la revendication 10, dans lequel
le système (5) présente au moins un serveur (12), qui contient le système informatique (6) ;
l'appareil (8) est configuré pour transmettre sans fil les informations biométriques au système informatique (6) ; et
le système informatique (6) est configuré pour transmettre la valeur de confiance ou un signal dépendant de la valeur de confiance ou des données dépendantes de la valeur de confiance à l'unité d'authentification (7).

12. Système d'authentification d'utilisateur selon la revendication 10, dans lequel
l'appareil (8) contient le système informatique (6) et est configuré pour transmettre sans fil la valeur de confiance ou un signal dépendant de la valeur de confiance ou des données dépendantes de la valeur de confiance à l'unité d'authentification (7).

13. Système logiciel d'authentification d'utilisateur, dans lequel
le système logiciel présente un premier programme informatique avec des premières instructions qui, lors de l'exécution du premier programme informatique par un appareil électronique mobile (8), incitent celui-ci à détecter pendant un intervalle d'enregistrement des informations biométriques d'un utilisateur (9) de l'appareil (8) ;
un deuxième programme informatique présente des deuxièmes instructions qui, lors de l'exécution du deuxième programme informatique par un système informatique (6), incitent celui-ci à déterminer une valeur de confiance pour une authenticité de l'utilisateur (9) en fonction des informations biométriques ; et un troisième programme informatique avec des troisièmes instructions qui, lors de l'exécution du troisième programme informatique par une unité d'authentification (7) incitent celle-ci à constater que l'appareil (8) se trouve dans un environnement prédéfini d'un dispositif à accès protégé (10) et à libérer un accès au dispositif (10) en fonction de la valeur de confiance, lorsque la valeur de confiance est inférieure à une valeur minimale prédéfinie, et
un algorithme et/ou des données de référence pour déterminer la valeur de confiance au moyen du système informatique (6) est adapté en fonction des informations biométriques, lorsque l'authentification active est effectuée avec succès.
